# EUROPEAN PATENT SPECIFICATION

(11) **EP 0 743 165 B1**
(45) Date of publication and mention of the grant of the patent: **20.09.2000**
(21) Application number: 96303489.7
(22) Date of filing: 16.05.1996
(51) Int. Cl.: B29C 70/30, B29C 70/44, B29B 11/16, B29C 35/02, D21J 7/00

(54) **Method and apparatus for moulding reinforced thermoplastics**
Verfahren und Vorrichtung zum Formen verstärkter thermoplastischer Verbundwerkstoffe
Procédé et appareil pour le moulage de matériaux thermoplastiques renforcés

(30) Priority: 18.05.1995 US 443419
(43) Date of publication of application: 20.11.1996
(73) Proprietor: THE BUDD COMPANY, Troy, MI 48084 (US)
(72) Inventor: Greve, Bruce Norman, Michigan 48348 (US)
(74) Representative: Waldren, Robin Michael

(56) References cited:
- EP-A- 0 062 142
- EP-A- 0 254 806
- DE-A- 3 614 533
- US-A- 5 286 326

## Description

### BACKGROUND OF THE INVENTION

The present invention relates generally to forming fiber reinforced plastic structures and, more particularly, to a method and apparatus for binding the fibers of a fiber reinforced plastic structure.

Fiber reinforced plastic (FRP) parts or composite parts are well known and used in a wide variety of applications. An FRP part generally consists of a plastic shape in which carbon, fiberglass, or other reinforcing fibers are dispersed in order to provide strength to the plastic. One method of making an FRP part is known as resin transfer molding (RTM). In RTM, fibrous material in a mold is injected with resin which cures to form the part. Examples of these techniques are disclosed in commonly assigned U.S. Patent Nos. 4,740,346; 4,849,147; 4,863,771; and 5,286,326. In RTM, fibrous material is often formed into a preliminary shape before being placed into the mold. The shaped sections generally conform to the shape of adjacent mold die surfaces and are known as preforms. Preforms have been made in several different manners. One approach is to direct chopped fibers by means of a flow of air onto a screen. One problem with this technique is that it is difficult to obtain desired fiber orientation. Another method is to make the preforms from mats of fibrous material. This method however results in undesirable amounts of scrap and is labor intensive thus resulting in production cost inefficiencies. Still another technique known as a wet slurry process is disclosed, for example, in Keown et al., "Wet Slurry Process Brings Precision To Reinforced Plastics". As discussed therein, a slurry containing chopped glass strands or fibers is drawn by vacuum into a chamber covered by a screen. As a result the fibers are deposited on the screen. This approach, however, also has some drawbacks. For example, it is somewhat difficult to consistently obtain the desired fiber orientation and compactness or density of the fibers using this equipment. In addition, the pumps and other equipment required to create the vacuum and draw the slurry through the screen may be unduly complex and difficult to maintain. Furthermore, the process is relatively slow. An improved wet slurry process is disclosed in commonly assigned U.S. Patent No. 5,039,465.

The process disclosed therein teaches drawing the slurry through the screen by raising the screen through a tank containing a slurry of fibers resulting in the fibers being deposited on the screen. Further disclosed are unique configurations for the holes in the screen to direct the fibers into desired orientations.

Of concern in any preform forming process is handling the fiber preform without disturbing the shape of the preform or the orientation of the fibers. To this end, commonly assigned U.S. Patent No. 5,286,326 discloses that a binding material may be deposited along with the fibers when forming the preform. The binding material gives the preform sufficient strength to allow for handling without disturbing its shape or the orientation of the fibers. In typical applications, the binding material is a thermoplastic fiber mixed into the slurry with the reinforcing fibers in a wet slurry process or blown onto the screen along with the reinforcing fibers if an air blown process is used.

After the preform is shaped, the preform, still on the screen, is introduced to a high frequency electromagnetic field for several seconds, thus melting the binding fibers and binding the reinforcing fibers of the preform. The preform then can be readily removed from the screen and handled without damaging it. The preform is then placed into a mold. Resin is then injected into the mold to impregnate the fibers in the preform and form the desired structure. While these methods and apparatuses are satisfactory, the present invention is believed to even further improve the art.

EP-A-62142 discloses a method for forming a fiber reinforced plastic structure, the method comprising creating a one-piece preform from a mixture having reinforcing fibers and thermoplastic resin matrix fibers, placing the preform into a complementary shaped mold, heating the preform, and cooling the preform to solidify the resin matrix fibers and form a rigid fiber reinforced plastic structure.

### SUMMARY OF THE INVENTION

In a first aspect, the present invention provides a method for forming a fiber reinforced plastic structure which comprises:
(a) creating a tackified preform from a mixture having reinforcing fibers and thermoplastic meltable resin matrix fibers, the thermoplastic meltable resin matrix fibers having first thermoplastic fibers and second thermoplastic fibers, the second thermoplastic fibers having a lower melting point than the first thermoplastic fibers, by
   mixing the reinforcing fibers, the first thermoplastic fibers and the second thermoplastic fibers together in a tank to form a slurry;
   raising a screen in the tank to cause the fibers to be deposited on the screen to form a preform;
   heating the preform to a temperature above a melting point of the second thermoplastic fibers but below a melting point of the first thermoplastic fibers to temporarily bind the reinforcing fibers in the preform to yield a tackified preform;
(b) placing the tackified preform into a complementary shaped mold;
(c) heating the tackified preform to a higher temperature which is above the melting point of the first thermoplastic fibers to cause them to melt and flow throughout the tackified preform;
(d) cooling the preform to generate a fiber reinforced plastic structure having an essentially uniform distribution of reinforcing fibers therein bound together by at least the first thermoplastic fibers;
(e) wherein the mixture includes a sufficient concentration of the resin matrix fibers to yield a substantially homogeneous fiber reinforced plastic structure and a sufficient concentration of the reinforcing fibers to provide structural rigidity to the fiber reinforced plastic structure;
(f) removing the rigid fiber reinforced plastic structure from the mold.
the resin matrix fibers flow to surround the reinforcing fibers to yield, after cooling, a substantially homogeneous fiber reinforced plastic structure. Preferably, the preform is created by a slurry process in which two different types of thermoplastic fibers are introduced into the slurry along with the reinforcing fibers. The first type of thermoplastic fibers, binder thermoplastic fibers, have a lower melting point than the second type of thermoplastic fibers and serve to temporarily bind or tackify the preform together. The second thermoplastic fibers have a higher concentration and a higher melting point than the binder thermoplastic fibers. The second type of thermoplastic fibers serve as the resin matrix fibers which, after heating, provide the matrix for holding the reinforcing fibers together to form a structural part.

In a second aspect, the present invention provides an apparatus for forming a fiber reinforced plastic structure comprising:
(a) a tank containing a mixture of reinforcing fibers, thermoplastic binding fibers and thermoplastic resin matrix fibers, the thermoplastic binding fibers having a lower melting point than the thermoplastic resin matrix fibers;
(b) a contoured screen disposed within the tank;
(c) means for transporting the contoured screen through the tank whereby the mixture is deposited on the contoured screen thereby forming a preform;
(d) first heating means for drawing high temperature fluid through the preform and the contoured screen to melt the thermoplastic binding fibers thereby tackifying the preform; and
(e) second heating means for drawing high temperature fluid through the preform to melt the thermoplastic resin matrix fibers and bind the reinforcing fibers together to provide uniform homogeneous structural rigidity to the fiber reinforced plastic structure, wherein the second heating means comprises a heated mold having a complementary cavity for receiving the preform.

Preferred embodiments are defined in the dependent claims 2-11 and 13-16 respectively.

### BRIEF DESCRIPTION OF THE DRAWINGS

The various advantages of the present invention will become apparent to one skilled in the art after reading the following specification and by reference to the drawings in which:
Figure 1 is a front cross-sectional view taken along the lines 1-1 of Figure 5 of a fiber reinforced plastic preform forming apparatus with the screen positioned at the bottom of the tank;
Figure 2 is a view of a fiber reinforced plastic preform forming apparatus after the screen has been raised to the top of the tank and an electromagnetic field generator is moved into close proximity to the fiber reinforced plastic preform;
Figure 3 is an enlarged partial cross-sectional view of the apparatus showing the electromagnetic field generator in contact with and compressing the fibers of the fiber reinforced plastic preform as deposited on the contoured screen;
Figure 4 is a perspective view of a fiber reinforced plastic preform;
Figure 5 is a top view of the apparatus partially broken away to further illustrate the matrix subframe structure;
Figure 6 is an enlarged partial cross-sectional view of the apparatus showing the seal and bubbler apparatus in particular detail;
Figure 7 is an enlarged partial cross-sectional view of the apparatus showing the screen mounting into a mask and matrix subframe;
Figure 8 is a perspective view of a binder fiber showing a matrix material with a dispersion of ferromagnetic particles;
Figure 9 is a front cross-sectional view similar to Figure 1 of a fiber reinforced plastic preform forming apparatus with the removable contoured first screen positioned at the bottom of the tank;
Figure 10 is a view of a fiber reinforced plastic preform forming apparatus after the first screen has been raised to the top of the tank and a second screen is moved into close proximity to the fiber reinforced plastic preform;
Figure 11 is an enlarged partial cross-sectional view of the apparatus showing the second screen in contact with and compressing the reinforcing fibers and the binding material of the fiber reinforced plastic preform on the first screen;
Figure 12 is a view similar to Figure 10 with the second screen retracted from the fiber reinforced plastic preform, and the fiber reinforced plastic preform removed from the first screen; Figure 13 is a schematic representation of the method for forming a fiber reinforced plastic structure according to an embodiment of the present invention;
Figure 14 is a front cross-sectional view similar to Figures 1 and 9 of a tank portion of a fiber reinforced plastic structure forming apparatus according to an embodiment of the present invention with the removable contoured screen positioned at the bottom of the tank;
Figure 15 is a view of a fiber reinforced plastic structure forming apparatus of an embodiment of the present invention after the screen has been raised to the top of the tank;
Figure 16 is a view of a fiber reinforced plastic preform and screen of an embodiment of the present invention in an oven wherein high temperature steam or fluid is drawn through the preform and screen to create a tackified preform; and
Figure 17 is a view of a tackified preform of an embodiment of the present invention in a complementary cavity of a mold.

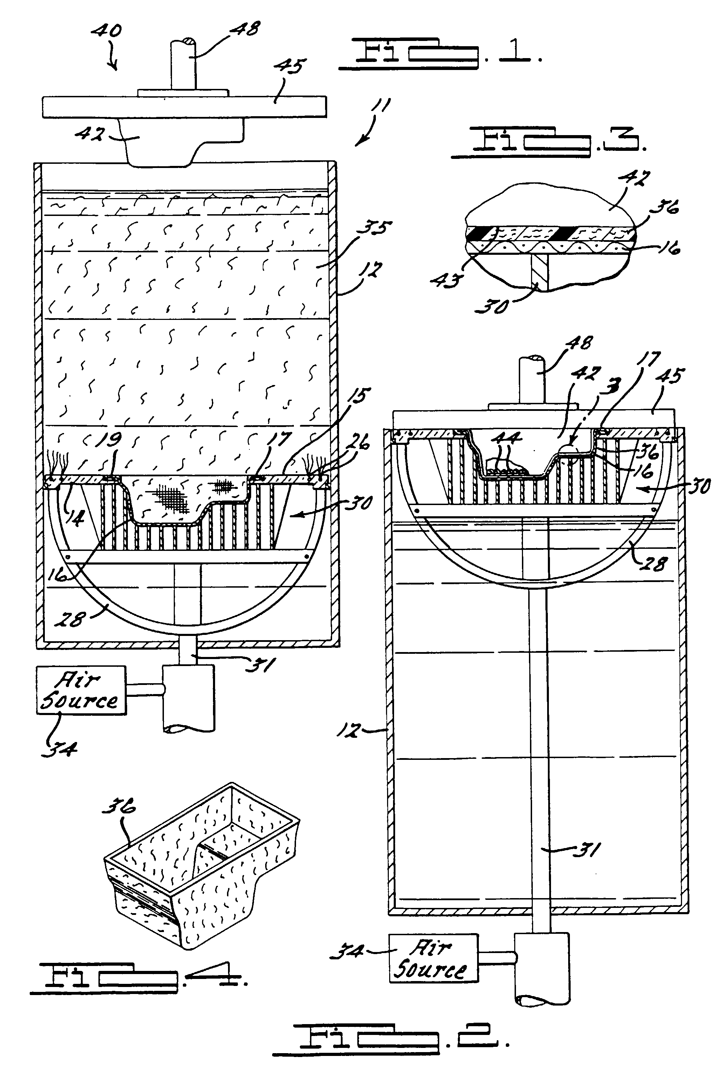

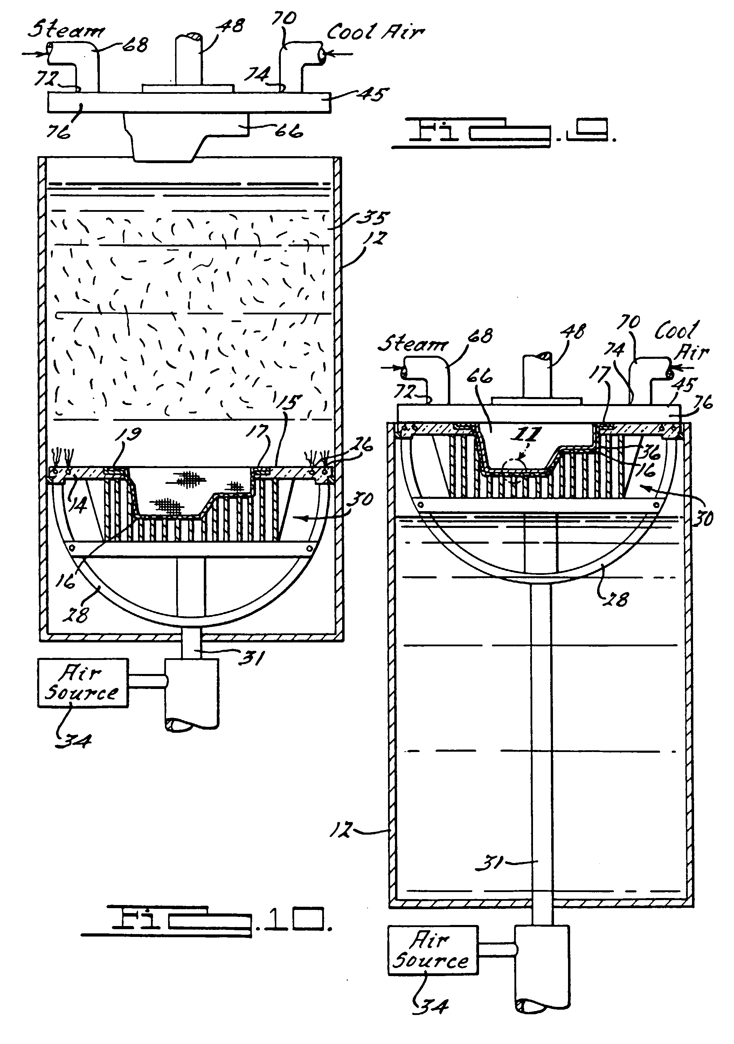

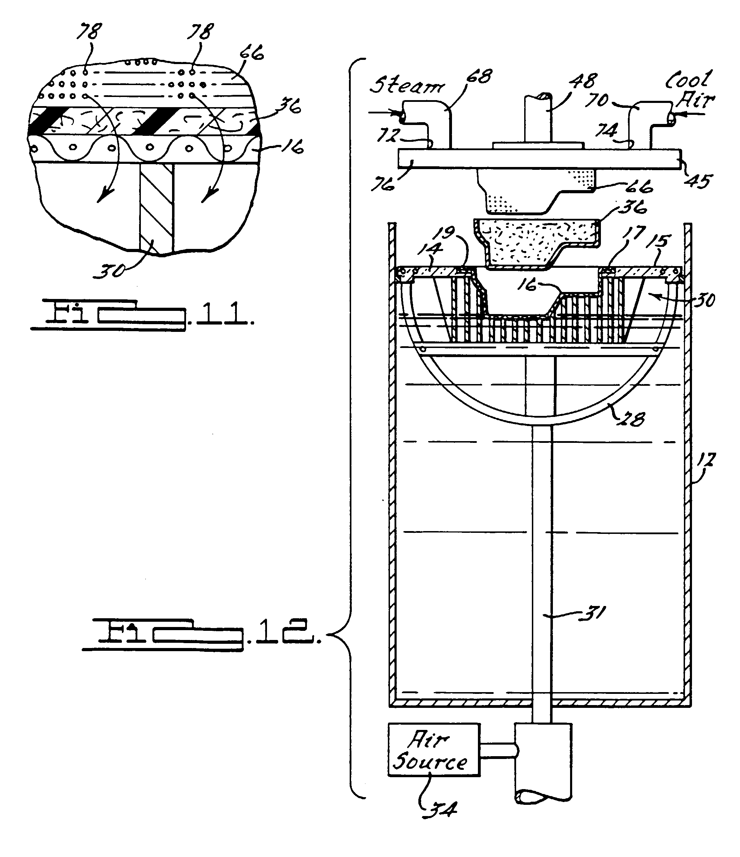

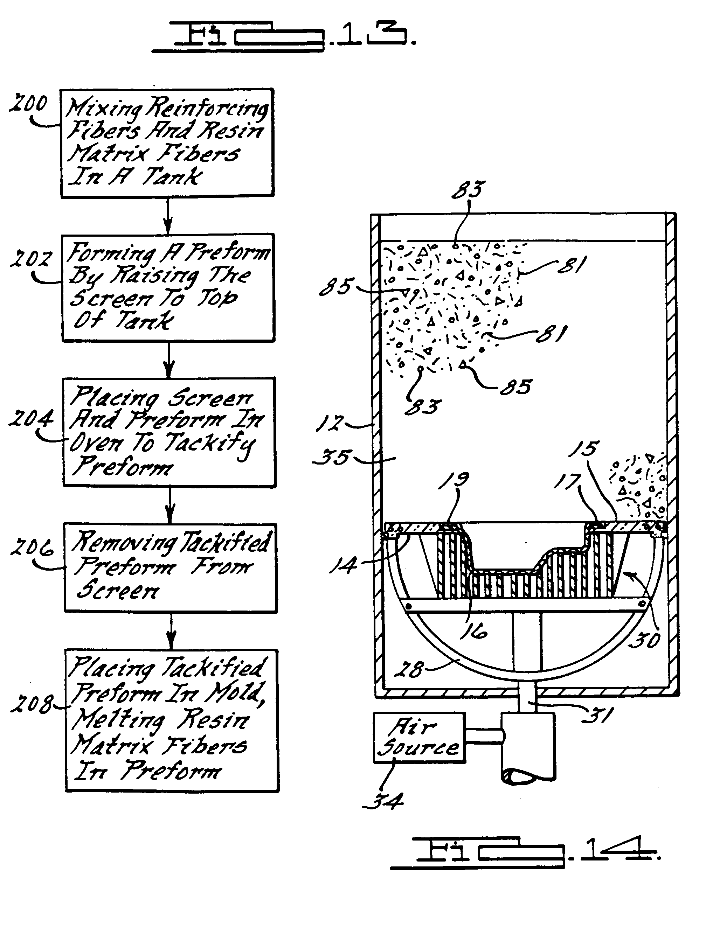

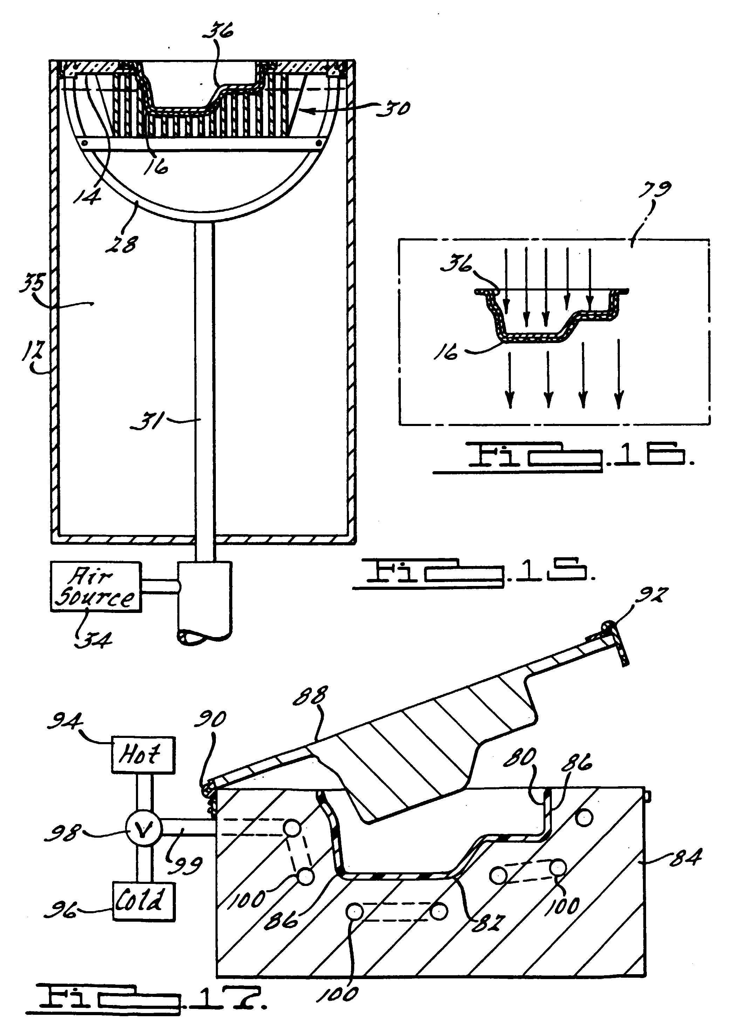

It should be understood from the outset that the scope of the present invention need not be limited to the particular examples used in connection with this invention since those skilled in the art will appreciate that its teachings can be used in a wide variety of applications. With this caveat in mind, the present invention will be described for exemplary purposes embodied in a wet slurry process an example of which is disclosed in the aforementioned commonly assigned U.S. Patent No. 5,039,465. With reference then to Figures 1 and 7, a contoured screen 16 having a defined geometry and containing openings of a preselected pattern has been placed in an aperture 19 formed in the surface of mask 14. The inner portion of mask 14 defining aperture 19 is provided with an offset or rabbetted surface 21 allowing seal 18 and a radially extending lip 17 of screen 16 to fit flush to planar surface 15 of mask 14. Mask 14 and screen 16 are shown supported by frame member 28 and matrix subframe 30. The subframe 30 is a grid of vertically extending metal bars and horizontally extending cross members. The top portion of matrix subframe 30 is suitably contoured to substantially match the contoured shape of screen 16 and thereby provide support over the entire surface area of screen 16. The bottom portion of subframe 30 is in contact with and suitably connected to frame member 28 thereby receiving support. As can best be seen in Figure 5, matrix subframe 30 defines a plurality of openings 31 for allowing liquid passing through contoured screen 16 to further pass substantially unobstructed through matrix subframe 30.

As shown in Figure 1, contoured screen 16 is initially positioned at the bottom of tank 12. Tank 12 is then filled with water and chopped reinforcing fibers such as glass, graphite, polyester or other suitable reinforcing fibers to create a slurry 35. Typically, the reinforcing fibers will be in bundles having approximately 500 filaments and a diameter of 2.5 to 25 microns with the bundles cut into one half to six inch lengths. Further added to slurry 35 are binding fibers 50. Preferably, the binding fibers comprise approximately about 3-10 and, preferably, 6 percent by weight of the total weight of the fibers added to create slurry 35.

The binding fiber 50 is shown in Figure 8 as a combination 52 of thermoplastic material having therein dispersed a quantity of filler material 54 having ferromagnetic properties. The combination material 52 may be any of the thermoplastic materials, such as thermoplastic polyester, polypropylene, polyethylene, or nylon, suitable for forming into fibers. The filler material may be any ferromagnetic material which may be made into small particles to be dispersed into the thermoplastic matrix. Several types of suitable ferromagnetic materials are discussed in U.S. Patent No. 2,393,541 and include iron, nickel, cobalt and their respective ferromagnetic alloys and oxides. The fiber 50 could consist of a thermoplastic polyester material with a 5-20 percent by weight dispersion of iron oxide particles having an irregular spherical shape approximately about 0.5-5 microns in diameter. When exposed to a high frequency electromagnetic field, the filler material 54 produces heat which then melts the thermoplastic material 52 binding the reinforcing fibers of the fiber preform in place. The fibers 50 can be made by melting a mass of thermoplastic material, adding thereto a mass of ferromagnetic material, mixing them to create a homogeneous mixture, extruding the mixture through a spinnerette or other suitable device and spinning or drawing it to a predetermined diameter. The fiber may then be cut to length. In the present invention, the fiber 50 is preferably 25-50 microns in diameter and cut approximately about 6,35-31,75 mm (0.25-1.25 inches) in length.

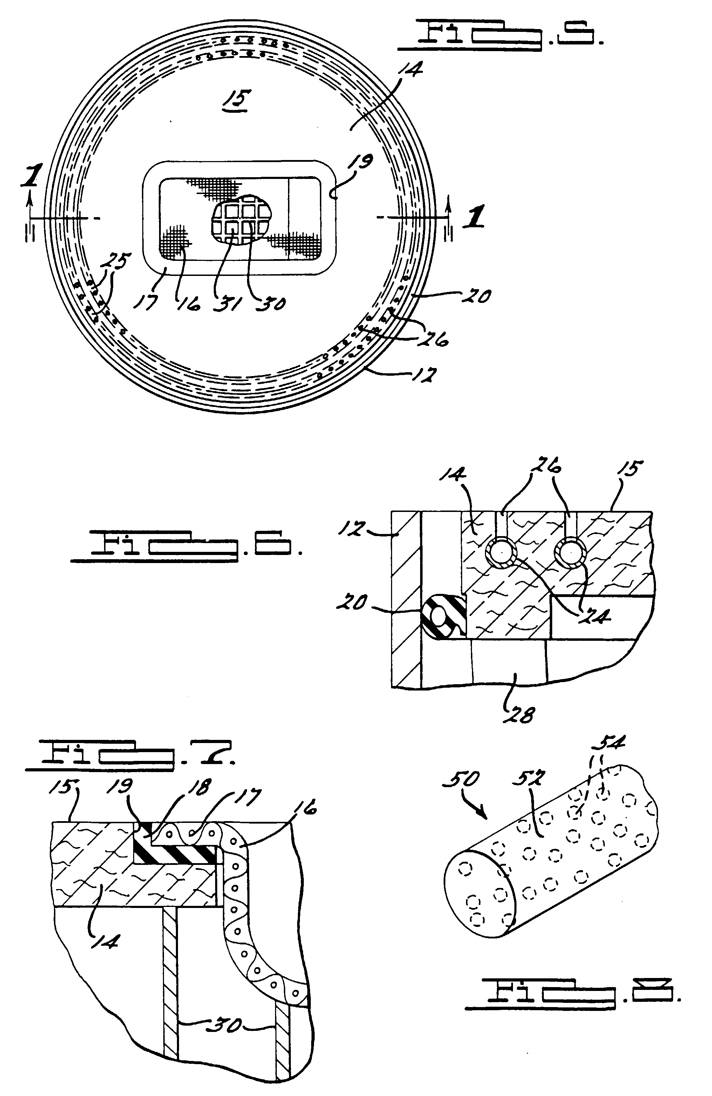

With reference once again to Figures 1 and 2, contoured screen 16, mask 14 and frame 28 are raised to the top of tank 12 by activating a piston 31 attached to frame 28. In raising screen 16 to the top of tank 12 it is desirable to raise screen 16 quickly enough to create a partial vacuum on the underside of screen 16. This partial vacuum accompanied with the atmospheric pressure bearing down on the portion of slurry 35 above screen 16 cause the flow of slurry 35 through contoured screen 16 and the dispersion of fibers onto the screen. The slurry is prevented from passing between mask 14 and walls of tank 12 by seal 20. This pressure differential, however, is equalized when any portion of mask 14 or screen 16 breaks the surface of slurry 35 thereby stopping the flow of slurry 35 through screen 16. It is therefore advantageous to maintain screen 16 below the surface of slurry 35 as long as possible. As can be seen in Figures 2 and 5, planar surface 15 of mask 14 is shown extending from the outer walls of tank 12 inwardly to aperture 19. Thus planar surface 15 of mask 14 allows for the pressure differential to be maintained for the maximum period of time by substantially maintaining all portions of screen 16 and mask 14 below the surface of slurry 35 until screen 16 reaches the top of tank 12. In raising screen 16 to the top of the tank, planar surface 15 further advantageously provides a smooth, unobstructed surface over which substantially all of the fibers of slurry 35 may be swept into contoured screen 16. Another advantage of mask 14 and planar surface 15 is demonstrated by the provision for mixing the reinforcing fibers.

As can be seen in Figures 5 and 6, embedded in mask 14 below planar surface 15 is a plurality of dispersion tubes 24 connected to the surface of mask 14 by a plurality of apertures 26 formed in mask 14. Air or water or other fluid is advantageously conducted to dispersion tubes 24 from a source 34 through hollow piston rod 31 and suitable connections to conduct fluid from hollow piston rod 31 to dispersion tubes 24. Air provided to tubes 24 is then conducted into tank 12 via apertures 26. In this manner slurry 35 is agitated directly above planar surface 15 thus assuring an even distribution of the reinforcing and binding fibers in slurry 35 and further improving the flow of slurry 35 over planar surface 15 to contoured screen 16.

Figures 2 and 3 show the apparatus in its finished position. Once raised to the top of tank 12 the reinforcing fibers and binding fibers of slurry 35 are deposited on contoured screen 16 in the desired preformed shape 36. High frequency electromagnetic field generator 40 is then lowered into close proximity with fiber preform 36. In this embodiment, high frequency electromagnetic field generator 40 has a contoured plug 42 of substantially the same shape as preform 36 mounted to a base 45. Embedded near the surface 43 of plug 42 are a plurality of electromagnetic induction coils 44. Thus, when lowered under the action of piston 48, plug 42 slightly compacts the fibers of preform 36 as a high frequency electromagnetic field is generated thereby melting the thermoplastic binding fibers and temporarily binding the reinforcing fibers of preform 36. In the present invention, the high frequency electromagnetic field is generated by a suitable control source (not shown) in the range of 2 KHz to 2 MHz with a typical application consisting of 1 MHz field active for approximately about 2-15, and preferably about 5 seconds.

While all of the theoretical technical details of the binding action of the present invention are not completely understood, it is believed that the heating of the binding fibers 50 by the electromagnetic field raises the temperature in the immediate area to cause localized vaporization of any water droplets adjacent to the binding fibers. In addition, the heat of the binding fibers, during application of the electromagnetic field, may cause water droplets to be driven away from the hot binding fibers thereby allowing the binding fibers to melt and act as an adhesive to bind together adjacent reinforcing fibers. When the electromagnetic field is removed, the water droplets in the vicinity tend to return to their original location due to capillary action thereby quenching the hot binding fibers to cool and solidify them. Accordingly, the electromagnetic field need be applied only for a limited period of time in order to transform the wet, unmanageable raw preform into an easily handled unit.

Once the reinforcing fibers of preform 36 have been temporarily bound together, preform 36 may be removed from contoured screen 16 by any suitable method. An exemplary preform is illustrated in Figure 4. In practice of the invention, contoured screen 16 would be suitably coated with Teflon® or other anti-sticking compound so as to prevent sticking of preform 36 to contoured screen 16 thereby improving the removal process. The removed preform then can be subjected to a drying process to remove residual water from the preform. This can be accomplished in a variety of manners such as forced air convection drying and other suitable methods. Once preform 36 is dried, a fiber reinforced part is created by placing the preform in a mold and injecting resin into the mold. The resin impregnates the fibers of the preform thereby forming the desired structure.

Figures 9-12 show a second example of apparatus for making a preform. Like reference numerals are used to identify like elements shown in the preceding figures.

As shown in Figure 9, contoured screen 16 is initially positioned at the bottom of tank 12. Tank 12 is then filled with water and chopped reinforcing fibers to create a slurry 35. Further added to slurry 35 are the binding fibers.

The binding material is just a matrix of thermoplastic material, and preferably, thermoplastic fibers. The matrix material may be any of the thermoplastic materials, such as thermoplastic polyester, polypropylene, polyethylene, or nylon, suitable for forming into fibers. The binding material consists of a thermoplastic polyester material, which melts when exposed to high temperature steam. When exposed to cool air, the melted thermoplastic fibers solidify to temporarily bind the reinforcing fibers of the fiber reinforced preform in place. The thermoplastic fibers can be made by melting a mass of thermoplastic material, extruding it through a spinnerette or other suitable device and spinning or drawing it to a predetermined diameter. The fibers may then be cut to length.

The fibers are preferably 25-50 microns in diameter and cut approximately about 6,35-31,75 mm (0.25-1.25 inches) in length.

With reference to Figures 9 and 10, removable contoured screen 16, mask 14 and frame 28 are raised to the top of tank 12 by activating a piston 31 attached to frame 28 in a similar manner as previously described.

Figures 10 and 11 show the apparatus in its finished position. Once raised to the top of tank 12 the reinforcing fibers and binding material of slurry 35 are deposited on removable contoured screen 16 in the desired preformed shape 36.

A second contoured screen 66, substantially the same shape and size as the inside surface of preform 36 is mounted to base 45. Second screen 66 and base 45 are lowered under the action of piston 48. Second screen 66 nests within removable contoured screen 16 capturing and holding the reinforcing fibers and binding material in place. Second screen 66 and removable contoured screen 16 are forced together with sufficient pressure to compress the reinforcing fibers and binding material together and remove trapped water from the preform.

As further shown in Figures 9, 10, 11 and 12, high temperature steam inlet conduit 68 and cool air inlet conduit 70 are mounted to base 45. Base 45 contains a high temperature steam inlet conduit opening 72 therein to allow for passage of high temperature steam from high temperature steam conduit 68 to chamber 76 and to the inner surface of second screen 66. The high temperature steam is then discharged through a plurality of openings 78 formed in second screen 66 and through preform 36 formed on removable contoured screen 16. Base 45 also contains a cool air inlet conduit opening 74 therein to allow for passage of cool air from cool air inlet conduit 70 through base 45 to preform 36 in substantially the same manner.

In operation, removable contoured screen 16, reinforcing fibers, binding material and second screen 66 are exposed to high temperature steam or other heated fluid. This high temperature steam is sufficiently hot (at least 150°C) and is maintained for a sufficient period of time (between 15 to 90 seconds) to melt the binding material. The heating of the binding material by the high temperature steam raises the temperature of the preform in the immediate area of the binding material causing vaporization of water droplets adjacent to the binding material. After the binding material is melted, removable contoured screen 16, reinforcing fibers, binding material and second screen 66 are exposed to a quantity of cool air (below about 150°C) for about 10 to 30 seconds, sufficient enough to solidify the binding material and temporarily lock the reinforcing fibers in place. Accordingly, this high temperature steam and cool air combination need be applied only for a limited period of time in order to transform the wet, unmanageable raw preform into an easily handled unit.

Once the reinforcing fibers of preform 36 have been bound together, second screen 66 is retracted to a position above tank 12. Removable contoured screen 16, mask 14 and frame 28 are then lowered into tank 12 whereby air in tank 12 trapped between the surface of the slurry and the bottom of mask 14 is forced through removable contoured screen 16 thereby causing preform 36 to be ejected from removable contoured screen 16. Ejected preform 36 may be retrieved by any suitable method. Retrieved preform 36 then can be subjected to a drying process to remove residual water. This can be accomplished in a variety of manners such as forced air convection drying and other suitable methods which would be compatible with the teachings of the present invention. Once preform 36 is dried, a fiber reinforced part is created by placing preform 36 in a mold and injecting resin into the mold, preferably using the above-described resin transfer molding (RTM) process. The resin impregnates the fibers of preform 36 thereby forming the desired structure.

Figures 13-17 show an embodiment of the present invention where, unlike the previous embodiments, there is no need for the resin injection step to form the final part. Like reference numerals are used to identify like elements of the preceding embodiments.

A schematic representation, as shown in Figure 13, concisely and succinctly sets forth the steps for forming a fiber reinforced plastic structure according to the embodiment of the present invention.

As shown at box 200 of Figure 13 and illustrated in Figure 14, contoured screen 16 is initially positioned at the bottom of tank 12. Tank 12 is then filled with water and chopped reinforcing fibers 81 to create a slurry 35. In this embodiment, binding fibers 83 of the type generally disclosed in the earlier embodiments are added to slurry 35 along with resin matrix fibers 85.

The binding fibers 83 are made of thermoplastic material and have a lower melting point and a lower proportion by weight when compared with the resin matrix fibers 85. Typically, the binding fibers 83 comprise approximately 2-7 percent by weight of the total weight of the preform and have a melting temperature of less than about 132°C (270°F). On the other hand, thermoplastic resin matrix fibers 85 comprise approximately 30-70 percent by weight of the total weight of the preform and have a melting temperature of between about 149°C (300°F) and about 232°C (450°F). The reinforcing fibers 81 constitute the balance of the total weight of the fiber reinforced plastic structure.

As in the previous examples the reinforcing fibers 81 may be made from glass, graphite, polyester or other suitable reinforcing fibers. Typically, the reinforcing fibers 81 will be approximately 12,5-101,2 mm (0.5 to 4 inches) in length and 25 to 50 microns in diameter. The binding fibers 83 are about 25 to 50 microns in diameter and about 6,35-31,75 mm (0.25 to 1.25 inches) in length. The binding fibers 83, as in the earlier examples, can be made of thermoplastic polyester, polypropylene, polyethylene or nylon. The thermoplastic resin matrix fibers 85 can be made of polypropylene, thermoplastic polyesters (PETs) or nylons, with a length of about 12,7-76,2 mm (0.5 to 3 inches) and a diameter of about 25 to 50 microns. Instead of the binding fibers 83 being separate from the thermoplastic resin matrix fibers 85, it is possible that a single fiber can be created in which the composition contains thermoplastic materials with different melting points and with different by-weight percentages in order to arrive at the desired characteristics.

With reference at box 202 of Figure 13 and illustrated in Figures 14 and 15, removable contoured screen 16, mask 14 and frame 28 are raised to the top of tank 12 by activating piston 31 attached to frame 28 in a similar manner as described in the previous examples.

With continuing reference to Figure 15, once raised to the top of tank 12, the reinforcing fibers 81, the binding fibers 83 and the matrix resin fibers 85 of slurry 35 are uniformly deposited on removable contoured screen 16 in the desired preform 36 shape. In this embodiment, once the wet preform 36 has been raised to the top of tank 12, the contoured screen 16 and wet preform 36 are removed from tank 12 and placed into an oven 79 as shown at box 204 of Figure 13 and schematically illustrated in Figure 16. High temperature fluid, such as steam, is then drawn through preform 36 by creating a negative pressure differential between the top and bottom of preform 36. The high temperature fluid or steam generated thereby will be sufficient to melt the thermoplastic binding fibers 83 but not the thermoplastic resin matrix fibers 85. For example, the preform can remain in the oven which is heated to about 300°F for about 1 minute. After cooling, reinforcing fibers 81 are temporarily bound by the melted binding fibers 83 to create tackified preform 80. By the term "tackified preform" it is meant that the preform is bound together sufficiently so that it can be removed from the screen and handled without being easily deformed. However, it does not have the desired structural rigidity for the final part. For example, the tackified preform can generally withstand loads of about 20 psi without substantial deformation but will be deformed by higher loads.

As shown at boxes 206 and 208 of Figure 13 and illustrated in Figure 17, tackified preform 80 is removed from contoured screen 16 and placed in a complementary cavity 82 of mold 84. Mold 84 has a relatively smooth molding surface 86. Mold 84 can be open-ended but preferably includes a cover 88. Cover 88 can take a variety of forms and it is presently contemplated that it can take the form of a flexible diaphragm which can be drawn by a vacuum against the upper surface of the preform. In Figure 17, however, cover 88 is shown as a pivoted rigid lid having a lower surface complementary in shape to the preform. Cover 88 is attached to mold 84 by any standard type of hinge mechanism 90 and is secured in a closed position by any standard type of latch mechanism 92. Cover 88 is held against the outer surface of tackified preform 80 while tackified preform 80 is supported in complementary cavity 82 of mold 84. The resultant pressure on tackified preform 80 due to cover 88 is relatively low, however, just sufficient enough to provide part definition.

As further shown at box 208 of Figure 13 and illustrated in Figure 17, high temperature fluid or steam source 94 and cool air source 96 are regulated by valve 98. Inlet conduit 99 connects valve 98 to mold 84. Disposed within mold 84 are heat transfer passageways 100 which allow for passage of high temperature fluid or steam from source 94 or cool air from source 96 throughout mold 84. Heat transfer passageways 100 are oriented in any standard type pattern to sufficiently heat or cool mold 84. One skilled in the art would readily recognize that heat transfer passageways 100 can be arranged such that different locations of mold 84 could have different heat transfer rates.

The mold 84 is heated to a temperature exceeding the melting temperature of the thermoplastic resin matrix fibers 85 to cause them to flow throughout the preform and surround the reinforcing fibers 81. Typically, the mold is heated to about 149-232°C (300 to 450°F) for a period of time between about 30 and 120 seconds.

After the thermoplastic resin matrix fibers 85 are melted, cool source 96 provides a sufficient amount of cool air or other fluid through valve 98, inlet conduit 99 and heat transfer passageways 100 to cool the mold 84. Tackified preform 80 is thereby cooled, sufficient enough to solidify the melted fibers 85 and bind the reinforcing fibers 81 in place to generate a substantially homogeneous fiber reinforced plastic structure having a sufficient concentration of resin matrix fibers and reinforcing fibers to provide structural rigidity. Typically, the mold is cooled to below about 143°C (290°F) for a period of time between about 15 and 30 seconds. The final part is then removed from the mold 84. The final part is characterized by a significantly higher structural rigidity than the tackified preform. For example, the final part can withstand tensile loads of over 34,45 MPa (5,000 psi) without substantial deformation.

Some advantages of the method and apparatus of the embodiment of the present invention is that there is no substantial displacement of fibers as compared to conventional structural molding compound (SMC) compression molding techniques since the slurry process already forces the fibers to be uniformly distributed throughout the preform. Therefore, a better, smoother surface is obtainable since no knit lines are encountered. Additionally, large, high tonnage presses are not required to form the desired fiber reinforced plastic structure. It is also possible thereafter to reheat and reshape the thermoplastic products of the present invention. Moreover, there is no styrene or resin involved in the method of the present invention and, therefore, it is possible to recycle the thermoplastic products generated by this method easier, thereby rendering an increased benefit to the environment.

Another significant advantage is that there is no resin injection step required in order to form the final part, as in the RTM procedure described in connection with the previous examples.

It should be appreciated by those skilled in the art that modifications can be made without departing from the true spirit or fair scope of the present invention. The present invention will therefore be understood as susceptible to modification, alteration or variation by those skilled in the art without deviating from the scope of the invention as defined by the following claims.

## Claims

1. A method for forming a fiber reinforced plastic structure which comprises:
(a) creating a tackified preform from a mixture having reinforcing fibers and thermoplastic meltable resin matrix fibers, the thermoplastic meltable resin matrix fibers having first thermoplastic fibers and second thermoplastic fibers, the second thermoplastic fibers having a lower melting point than the first thermoplastic fibers, by
mixing the reinforcing fibers, the first thermoplastic fibers and the second thermoplastic fibers together in a tank (12) to form a slurry (35);
raising a screen (16) in the tank (12) to cause the fibers to be deposited on the screen (16) to form a preform;
heating the preform (36) to a temperature above a melting point of the second thermoplastic fibers but below a melting point of the first thermoplastic fibers to temporarily bind the reinforcing fibers in the preform to yield a tackified preform;
(b) placing the tackified preform (36) into a complementary shaped mold (84);
(c) heating the tackified preform to a higher temperature which is above the melting point of the first thermoplastic fibers to cause them to melt and flow throughout the tackified preform;
(d) cooling the preform to generate a fiber reinforced plastic structure having an essentially uniform distribution of reinforcing fibers therein bound together by at least the first thermoplastic fibers;
(e) wherein the mixture includes a sufficient concentration of the resin matrix fibers to yield a substantially homogeneous fiber reinforced plastic structure and a sufficient concentration of the reinforcing fibers to provide structural rigidity to the fiber reinforced plastic structure;
(f) removing the rigid fiber reinforced plastic structure from the mold.

2. The method of claim 1 wherein said second thermoplastic fibers have a lower concentration than said first thermoplastic fibers.

3. The method of claim 1 or 2, wherein the meltable resin matrix fibers comprise thermoplastic fibers in the concentration of approximately 30-70 percent by weight of the total weight of the preform.

4. The method of claim 3 wherein the second thermoplastic fibers comprise approximately 2-7 percent by weight of the total weight of the preform and have a melting temperature of less than about 132°C (270°F).

5. The method of claim 4, wherein the step of heating the preform (36) comprises:
drawing a high temperature fluid through the preform to melt the second thermoplastic fibers sufficiently to create a tackified preform which can be more easily handled; and
thereafter, removing the tackified preform from the screen.

6. The method of claim 1, which further comprises:
placing a cover (88) over the preform (36) during the heating step and applying sufficient pressure to the preform (36) during heating and subsequent cooling to maintain the desired shape of the structure.

7. The method of claim 1, wherein the length of the reinforcing fibers (81) ranges from 12,7-152,4 mm (0.5 to 6 inches), the length of the matrix fibers (85) range from 12,7-76,2 mm (0.5 to 3 inches), and wherein the length of the binding fibers (83) range from 6,35-31,75 mm (0.25 to 1.25) inches.

8. The method of any one of the preceding claims, wherein the step of creating a one-piece preform comprises the steps of:
(a) placing a contoured screen (16) in a tank (12) filled with liquid;
(b) adding reinforcing fibers (81) to the liquid to create a slurry (35);
(c) adding meltable resin matrix fibers (85) to the slurry;
(d) adding meltable binding fibers (83) to the slurry; and
(e) raising the screen (16) in the tank (12) thereby causing all of the fibers to be deposited on the screen (16).

9. The method of claim 1, wherein the resin matrix fibers and the binding fibers comprise thermoplastic polyesters.

10. The method of claim 8, which further comprises, after step (f):
(1) heating the preform to a temperature above a melting point of the binding fibers (83) but below a melting point of the resin matrix fibers (85) to yield a tackified preform;
(2) placing the tackified preform in a complementary cavity in a mold (84);
(3) exposing the tackified preform to heat to melt the resin matrix fibers (85) such that they flow throughout the tackified preform;
(4) cooling the preform (36) to generate a fiber reinforced plastic structure having an essentially uniform distribution of reinforcing fibers therein bound together by at least the resin matrix fibers; and
(5) removing the fiber reinforced plastic structure from the complementary cavity in the mold (84).

11. The method of claim 8, wherein the resin matrix fibers and the binding fibers comprise thermoplastic polyesters.

12. An apparatus for forming a fiber reinforced plastic structure comprising:
(a) a tank (12) containing a mixture of reinforcing fibers, thermoplastic binding fibers and thermoplastic resin matrix fibers, the thermoplastic binding fibers having a lower melting point than the thermoplastic resin matrix fibers;
(b) a contoured screen (16) disposed within the tank (12);
(c) means for transporting the contoured screen (16) through the tank (12) whereby the mixture is deposited on the contoured screen (16) thereby forming a preform (36);
(d) first heating means for drawing high temperature fluid through the preform (36) and the contoured screen (16) to melt the thermoplastic binding fibers (83) thereby tackifying the preform (36); and
(e) second heating means for drawing high temperature fluid through the preform (36) to melt the thermoplastic resin matrix fibers and bind the reinforcing fibers together to provide uniform homogeneous structural rigidity to the fiber reinforced plastic structure, wherein the second heating means comprises a heated mold (84) having a complementary cavity for receiving the preform (36).

13. The apparatus of claim 12, wherein the contoured screen (16) is removable.

14. The apparatus of claim 13, wherein the thermoplastic binding fibers have a lower concentration than the thermoplastic resin matrix fibers.

15. The apparatus of claim 14, wherein the binding fibers comprise approximately 2-7 percent by weight of the total weight of the preform and have a melting temperature of less than about 132°C (270°F), and wherein the resin matrix fibers comprise approximately 30-70 percent by weight of the total weight of the preform and have a melting temperature between about 149°C (300°F) and about 232°C (450°F).

16. The apparatus of claim 12 wherein the mold further comprises:
a flexible diaphragm cover (88) to cover the preform (36) which is operable to apply sufficient pressure to the preform during heating and subsequent cooling to maintain the desired shape of the structure.

## Patentansprüche

1. Verfahren zum Formen einer faserverstärkten Kunststoffstruktur, aufweisend:
(a) Erzeugen eines klebfähig ausgeführten Vorformlings aus einer Mischung, die verstärkende Fasern und thermoplastische, schmelzfähige Kunstharzmatrixfasem aufweist, wobei die thermoplastischen, schmelzfähigen Kunstharzmatrixfasern erste thermoplastische Fasern und zweite thermoplastische Fasern aufweisen und die zweiten thermoplastischen Fasern einen niedrigeren Schmelzpunkt haben als die ersten thermoplastischen Fasern; und zwar durch:
Zusammenmischen der verstärkenden Fasern, der ersten thermoplastischen Fasern und der zweiten thermoplastischen Fasern in einem Behälter (12), um eine Aufschlämmung (35) zu erzeugen;
Anheben eines Siebes (16) in dem Behälter (12), um zu bewirken, dass die Fasern auf dem Sieb (16) unter Erzeugung eines Vorformlings abgeschieden werden;
Erhitzen des Vorformlings (36) auf eine Temperatur oberhalb des Schmelzpunktes der zweiten thermoplastischen Fasern, jedoch unterhalb eines Schmelzpunktes der ersten thermoplastischen Fasern, um temporär die verstärkenden Fasern in dem Vorformling zu binden und einen klebfähig ausgeführten Vorformling zu ergeben;
(b) Einlegen des klebfähig ausgeführten Vorformlings (36) in eine komplementär geformte Pressform (84);
(c) Erhitzen des klebfähig ausgeführten Vorformlings auf eine höhere Temperatur, die oberhalb des Schmelzpunktes der ersten thermoplastischen Fasern liegt, um zu bewirken, dass sie schmelzen und durch den klebfähig ausgeführten Vorformling fließen;
(d) Kühlen des Vorformlings, um eine faserverstärkte Kunststoffstruktur mit im wesentlichen gleichförmiger Verteilung der verstärkenden Fasern zu erzeugen, die darin untereinander durch mindestens die ersten thermoplastischen Fasern gebunden sind;
(e) wobei in die Mischung eine ausreichende Konzentration der Kunststoffmatrixfasern einbezogen ist, um eine weitgehend homogene faserverstärkte Kunststoffstruktur zu ergeben, sowie eine ausreichende Konzentration der verstärkenden Fasern, um der faserverstärkten Kunststoffstruktur eine strukturelle Formstabilität zu vermitteln;
(f) Entfernen der starren, faserverstärkten Kunststoffstruktur aus der Pressform.

2. Verfahren nach Anspruch 1, bei welchem die zweiten thermoplastischen Fasern eine geringere Konzentration haben als die ersten thermoplastischen Fasern.

3. Verfahren nach Anspruch 1 oder 2, bei welchem die schmelzfähigen Kunstharzmatrixfasern thermoplastische Fasern in einer Konzentration von näherungsweise 30 bis 70 Gewichtsprozent des Gesamtgewichts des Vorformlings aufweisen.

4. Verfahren nach Anspruch 3, bei welchem die zweiten thermoplastischen Fasern näherungsweise 2 bis 7 Gewichtsprozent des Gesamtgewichts des Vorformlings ausmachen und eine Schmelztemperatur von weniger als etwa 132°C (270°F) haben.

5. Verfahren nach Anspruch 4, bei welchem der Schritt des Erhitzens des Vorformlings (36) aufweist:
Ziehen eines Hochtemperaturfluids durch den Vorformling, um die zweiten thermoplastischen Fasern hinreichend zu schmelzen, um einen klebfähig ausgeführten Vorformling zu erzeugen, der leichter gehandhabt werden kann; und danach
Entfernen des klebfähig ausgeführten Vorformlings von dem Sieb.

6. Verfahren nach Anspruch 1, welches ferner aufweist:
Aufbringen eines Deckels (88) über den Vorformling (36) während des Schrittes des Erhitzens und Aufbringen von ausreichendem Druck auf den Vorformling (36) während des Erhitzens und nachfolgenden Kühlens, um die angestrebte Form der Struktur zu erhalten.

7. Verfahren nach Anspruch 1, bei welchem die Länge der verstärkenden Fasern (81) im Bereich von 12,7 bis 152,4 mm (0,5 bis 6 inch) liegt, die Länge der Matrixfasern (85) im Bereich von 12,7 bis 76,2 mm (0,5 bis 3 inch) liegt und die Länge der bindenden Fasern (83) im Bereich von 6,55 bis 31,75 mm (0,25 bis 1,25 inch) liegt.

8. Verfahren nach einem der vorgenannten Ansprüche, bei welchem der Schritt des Erzeugens eines einstückigen Vorformlings die Schritte umfasst:
(a) Einlegen eines formangepassten Siebes (16) in einen mit Flüssigkeit gefüllten Behälter (12);
(b) Hinzufügen von verstärkenden Fasern (81) zu der Flüssigkeit, um eine Aufschlämmung (35) zu erzeugen;
(c) Hinzufügen von schmelzfähigen Kunstharzmatrixfasern (85) zu der Aufschlämmung;
(d) Hinzufügen von schmelzfähigen bindenden Fasern (83) zu der Aufschlämmung; sowie
(e) Anheben des Siebes (16) in dem Behälter (12), wodurch bewirkt wird, dass alle Fasern auf dem Sieb (16) abgeschieden werden.

9. Verfahren nach Anspruch 1, bei welchem Kunstharzmatrixfasem und die bindenden Fasern thermoplastische Polyester umfassen.

10. Verfahren nach Anspruch 8, ferner nach Schritt (f) aufweisend:
(1) Erhitzen des Vorformlings auf eine Temperatur oberhalb eines Schmelzpunktes der bindenden Fasern (83), jedoch unterhalb eines Schmelzpunktes der Kunstharzmatrixfasern (85), um einen klebfähig ausgeführten Vorformling zu ergeben;
(2) Einlegen des klebfähig ausgeführten Vorformlings in ein komplementäres Formnest in einer Pressform (84);
(3) Exponieren des klebfähig ausgeführten Vorformlings, um die Kunstharzmatrixfasem (85) derart bis zur Schmelze zu erhitzen, dass sie durch den klebfähig ausgeführten Vorformling fließen;
(4) Kühlen des Vorformlings (36), um eine faserverstärkte Kunststoffstruktur mit im wesentlichen gleichförmiger Verteilung von verstärkenden Fasern zu erzeugen, die darin untereinander durch mindestens die Kunstharzmatrixfasern gebunden sind; sowie
(5) Entfernen der faserverstärkten Kunststoffstruktur aus dem komplementären Formnest der Pressform (84).

11. Verfahren nach Anspruch 8, bei welchem die Kunstharzmatrixfasern und die bindenden Fasern thermoplastische Polyester aufweisen.

12. Apparat zum Formen einer faserverstärkten Kunststoffstruktur, aufweisend:
(a) einen Behälter (12), der eine Mischung von verstärkenden Fasern, thermoplastischen bindenden Fasern und thermoplastischen Kunstharzmatrixfasern enthält, wobei die thermoplastischen bindenden Fasern einen niedrigeren Schmelzpunkt haben als die thermoplastischen Kunstharzmatrixfasem;
(b) ein im Inneren des Behälters (12) angeordnetes formangepasstes Sieb (16);
(c) Mittel zum Transportieren des formangepassten Siebes (16) durch den Behälter (12), wodurch die Mischung auf dem formangepassten Sieb (16) abgeschieden wird und dadurch einen Vorformling (36) formt;
(d) erstes Mittel zum Erhitzen, um Hochtemperaturfluid durch den Vorformling (36) und das formangepasste Sieb (16) zu ziehen, um die thermoplastischen bindenden Fasern (83) zu schmelzen und dadurch den Vorformling (36) klebfähig zu machen; und
(e) zweites Mittel zum Erhitzen, um Hochtemperaturfluid durch den Vorformling (36) zu ziehen, um die thermoplastischen Kunstharzmatrixfasern zu schmelzen und die verstärkenden Fasern untereinander zu binden, um der faserverstärkten Kunststoffstruktur eine gleichförmige, homogene strukturelle Formstabilität zu vermitteln, wobei das zweite Mittel zum Erhitzen eine erhitzte Pressform (84) mit einem komplementären Formnest zum Aufnehmen des Vorformlings (36) aufweist.

13. Apparat nach Anspruch 12, wobei das formangepasste Sieb (16) entfernbar ist.

14. Apparat nach Anspruch 13, wobei die thermoplastischen bindenden Fasern eine geringere Konzentration haben als die thermoplastischen Kunstharzmatrixfasern.

15. Apparat nach Anspruch 14, wobei die bindenden Fasern näherungsweise 2 bis 7 Gewichtsprozent des Gesamtgewichts des Vorformlings ausmachen und eine Schmelztemperatur von weniger als etwa 132°C (270°F) haben und wobei die Kunstharzmatrixfasern näherungsweise 30 bis 70 Gewichtsprozent des Gesamtgewichts des Vorformlings ausmachen und eine Schmelztemperatur zwischen etwa 149°C (300°F) und etwa 232°C (450°F) haben.

16. Apparat nach Anspruch 12, wobei die Pressform ferner aufweist:
eine flexible Membran-Abdeckung (88), um den Vorformling (36) abzudecken, die betätigt werden kann, um auf den Vorformling während des Erhitzens und nachfolgenden Kühlens ausreichend Druck aufzubringen, um die angestrebte Form der Struktur zu erhalten.

## Revendications

1. Procédé pour former une structure plastique renforcée par des fibres, qui comprend:
(a) la formation d'une préforme collée à partir d'un mélange ayant des fibres renforçantes et des fibres de matrice de résine thermoplastiques fusibles, les fibres de la matrice de résine thermoplastiques fusibles ayant des premières fibres thermoplastiques et des secondes fibres thermoplastiques, les secondes fibres thermoplastiques ayant un point de fusion inférieur à celui des premières fibres thermoplastiques,
en mélangeant les fibres renforçantes, les premières fibres thermoplastiques et les secondes fibres thermoplastiques ensemble dans un réservoir (12) pour former une suspension épaisse (35);
en remontant un écran (16) dans le réservoir (12) pour faire déposer les fibres sur l'écran (16) pour former une préforme;
en chauffant la préforme (36) à une température supérieure au point de fusion des secondes fibres thermoplastiques mais en dessous du point de fusion des premières fibres thermoplastiques pour lier temporairement les fibres renforçantes dans la préforme et donner une préforme collée;
(b) le placement de la préforme collée (36) dans un moule façonné complémentaire (84);
(c) le chauffage de la préforme collée à une température plus élevée qui est supérieure au point de fusion des premières fibres thermoplastiques pour les faire fondre et s'écouler à travers la préforme collée;
(d) le refroidissement de la préforme pour former une structure plastique renforcée par des fibres ayant une distribution essentiellement uniforme des fibres renforçantes dans celle-ci, liées entre elles par au moins les premières fibres thermoplastiques;
(e) dans lequel le mélange inclut une concentration suffisante des fibres de matrice de résine pour donner une structure plastique renforcée par des fibres substantiellement homogène et une concentration suffisante des fibres renforçantes pour conférer de la rigidité structurale à la structure plastique renforcée par des fibres;
(f) le démoulage de la structure plastique rigide renforcée par des fibres.

2. Procédé selon la revendication 1, dans lequel lesdites secondes fibres thermoplastiques ont une concentration inférieure à celle desdites premières fibres thermoplastiques.

3. Procédé selon la revendication 1 ou 2, dans lequel les fibres de la matrice de résine fusibles comprennent des fibres thermoplastiques en une concentration d'approximativement 30 à 70% en poids par rapport au poids total de la préforme.

4. Procédé selon la revendication 3, dans lequel les secondes fibres thermoplastiques représentent approximativement 2 à 7% en poids par rapport au poids total de la préforme et ont une température de fusion inférieure à environ 132°C (270°F).

5. Procédé selon la revendication 4, dans lequel l'étape de chauffage de la préforme (36), comprend:
le passage d'un fluide à haute température à travers la préforme pour faire fondre les secondes fibres thermoplastiques suffisamment pour créer une préforme collée qui peut être plus aisément manipulée; et
ensuite, le retrait de la préforme collée de l'écran.

6. Procédé selon la revendication 1, qui comprend en outre:
le placement d'un couvercle (88) sur la préforme (36) pendant l'étape de chauffage, et l'application d'une pression suffisante à la préforme (36) pendant le chauffage et le refroidissement subséquent pour maintenir la forme souhaitée de la structure.

7. Procédé selon la revendication 1, dans lequel la longueur des fibres renforçantes (81) va de 12,7 à 152,4 mm (0,5 à 6 pouces), la longueur des fibres de la matrice (85) va de 12,7 à 76,2 mm (0,5 à 3 pouces), et dans lequel la longueur des fibres de liaison (83) va de 6,55 à 31,75 mm (0,25 à 1,25 pouce).

8. Procédé selon l'une quelconque des revendications précédentes, dans lequel l'étape de formation d'une préforme en une pièce comprend les étapes consistant:
(a) à placer un écran profilé (16) dans un réservoir (12) rempli avec un liquide;
(b) à ajouter des fibres renforçantes (81) au liquide pour former une suspension épaisse (35);
(c) à ajouter des fibres de matrice de résine fusibles (85) à la suspension épaisse;
(d) à ajouter des fibres de liaison fusibles (83) à la suspension épaisse; et
(e) à remonter l'écran (16) dans le réservoir (12), ce qui provoque le dépôt de toutes les fibres sur l'écran (16).

9. Procédé selon la revendication 1, dans lequel les fibres de la matrice de résine et les fibres de liaison comprennent des polyesters thermoplastiques.

10. Procédé selon la revendication 8, qui comprend en outre, après l'étape (f):
(1) le chauffage de la préforme à une température supérieure au point de fusion des fibres de liaison (83) mais inférieure au point de fusion des fibres de la matrice de résine (85) pour donner une préforme collée;
(2) le placement de la préforme collée dans une cavité complémentaire dans un moule (84);
(3) l'exposition de la préforme collée pour chauffer et faire fondre les fibres de la matrice de résine (85) de sorte qu'elles s'écoulent à travers la préforme collée;
(4) le refroidissement de la préforme (36) pour produire une structure plastique renforcée par des fibres ayant une distribution essentiellement uniforme des fibres renforçantes dans celle-ci, liées ensemble au moins par les fibres de la matrice de résine; et
(5) l'enlèvement de la structure plastique renforcée par des fibres de la cavité complémentaire du moule (84).

11. Procédé selon la revendication 8, dans lequel les fibres de la matrice de résine et les fibres de liaison comprennent des polyesters thermoplastiques.

12. Appareil pour former une structure plastique renforcée par des fibres, comprenant:
(a) un réservoir (12) contenant un mélange de fibres renforçantes, de fibres de liaison thermoplastiques et de fibres de matrice de résine thermoplastiques, les fibres de liaison thermoplastiques ayant un point de fusion inférieur à celui des fibres de la matrice de résine thermoplastiques;
(b) un écran profilé (16) disposé dans le réservoir (12);
(c) un moyen pour transporter l'écran profilé (16) à travers le réservoir (12), de sorte que le mélange est déposé sur l'écran profilé (16), formant ainsi une préforme (36);
(d) un premier moyen de chauffage pour faire passer le fluide à haute température à travers la préforme (36) et l'écran profilé (16) pour faire fondre les fibres de liaison thermoplastiques (83), ce qui colle la préforme (36); et
(e) un second moyen de chauffage pour faire passer un fluide à haute température à travers la préforme (36) pour faire fondre les fibres de la matrice de résine thermoplastiques et lier les fibres renforçantes ensemble pour conférer une rigidité structurale homogène uniforme à la structure plastique renforcée par des fibres, le second moyen de chauffage comprenant un moule chauffé (84) ayant une cavité complémentaire pour recevoir la préforme (36).

13. Appareil selon la revendication 12, dans lequel l'écran profilé (16) est amovible.

14. Appareil selon la revendication 13, dans lequel les fibres de liaison thermoplastiques ont une plus faible concentration que les fibres de la matrice de résine thermoplastiques.

15. Appareil selon la revendication 14, dans lequel les fibres de liaison représentent approximativement 2 à 7% en poids du poids total de la préforme et ont une température de fusion inférieure à environ 132°C (270°F), et dans lequel les fibres de la matrice de résine représentent approximativement 30 à 70% en poids du poids total de la préforme et ont une température de fusion entre environ 149°C (300°F) et environ 232°C (450°F).

16. Appareil selon la revendication 12, dans lequel le moule comprend en outre:
un couvercle de type diaphragme flexible (88) pour recouvrir la préforme (36) qui permet d'appliquer une pression suffisante à la préforme pendant le chauffage et le refroidissement subséquent pour maintenir la forme souhaitée de la structure.
